# EUROPÄISCHE PATENTSCHRIFT

(11) **EP 3 577 380 B1**
(45) Veröffentlichungstag und Bekanntmachung des Hinweises auf die Patenterteilung: **26.10.2022**
(21) Anmeldenummer: 18714434.0
(22) Anmeldetag: 23.02.2018
(51) Int. Cl.: F16L 3/015, B25J 18/00, B25J 19/00

(54) **BEFESTIGUNGSVORRICHTUNG FÜR EINEN VERSORGUNGSSCHLAUCH UND/ODER EINE VERSORGUNGSLEITUNG ZUM BEFESTIGEN AN EINEM INDUSTRIEROBOTERARM**
ATTACHING DEVICE FOR A SUPPLY HOSE AND/OR SUPPLY LINE FOR ATTACHING TO AN INDUSTRIAL ROBOT ARM
DISPOSITIF DE FIXATION POUR UN TUYAU FLEXIBLE D'ALIMENTATION ET/OU UNE CONDUITE D'ALIMENTATION DESTINÉ(E) À ÊTRE FIXÉ(E) SUR UN BRAS DE ROBOT INDUSTRIEL

(30) Priorität: 31.03.2017 DE 102017107043
(43) Veröffentlichungstag der Anmeldung: 11.12.2019
(73) Patentinhaber: BizLink Industry Germany GmbH, 91154 Roth (DE)
(72) Erfinder: JOESTEN, Bernd, 30966 Hemminge (DE)
(74) Vertreter: Weidner Stern Jeschke
(86) Internationale Anmeldenummer: PCT/DE2018/200015
(87) Internationale Veröffentlichungsnummer: WO 2018/177482

(56) Entgegenhaltungen:
- JP-A- 2007 015 057
- US-A- 5 816 736
- US-A1- 2009 146 019
- US-B1- 6 431 018

## Beschreibung

Die Erfindung betrifft eine Befestigungsvorrichtung für einen Versorgungsschlauch und/oder eine Versorgungsleitung zum Befestigen an einem Industrieroboterarm.

Industrieroboterarme werden in der industriellen Fertigung eingesetzt und benötigen für ihren Betrieb eine Energie-, Medien- und/oder Datenversorgung. Dazu werden üblicherweise entsprechende Schläuche und/oder Steuerungs- und Leistungskabel von einer zentralen Versorgungseinheit zu dem Industrieroboterarm geführt. Diese Kabel und Schläuche, wie beispielsweise ein Druckluftschlauch, werden entweder einzeln oder gebündelt in einem flexiblen Versorgungsschlauch entlang des Roboterarmes geführt.

Herkömmlicherweise werden Versorgungsschläuche und/oder Versorgungsleitungen mit Rohrschellen am Roboterarm befestigt. Die Montage und Demontage von Rohrschellen ist jedoch zeitaufwendig und dabei kann es leicht zu Beschädigungen am Roboterarm kommen. Zudem stellen die Rohrschellen durch die feste Montage Störkonturen dar, welche den Betrieb eines Roboterarmes stören und/oder einschränken können.

Es ist es ebenso bekannt, Versorgungsschläuche und/oder Versorgungsleitungen innerhalb einer steifen Hülse, beispielsweise aus Kunststoff, entlang des Roboterarmes zu führen und/oder die Versorgungsschläuche und/oder Leitungen mittels eines separat angeordneten Zusatzauslegers in der gewünschten Position zu halten. In beiden Fällen wird jedoch der Arbeitsbereich des Roboterarmes eingeschränkt und ein Kollisionsrisiko erhöht.

Zwar können Versorgungsschläuche und -leitungen prinzipiell auch innerhalb eines Roboterarms geführt werden. Dies erschwert jedoch die Wartung und das Erkennen von Leckagen. Zudem ist ein aufwendiger Umbau erforderlich, wenn der Industrieroboter auf eine andere Anwendung und/oder ein anderes zu versorgendes Werkzeug angepasst werden muss. Insbesondere beim Einsatz von Kleinstrobotern besteht aufgrund des fehlenden Platzes keine Möglichkeit Versorgungsschläuche oder -leitungen innerhalb des Kleistroboterarmes zu führen.

Zudem werden insbesondere Kleinstroboter in vielfältigen Anwendungen eingesetzt und müssen jedes Mal für eine neue Anwendung aufwendig neu mit Versorgungsschläuchen und/oder -leitungen ausgerüstet werden.

Die US 2009/0146019 A1 offenbart eine Kabelführungsvorrichtung für einen industriellen Roboter, bei welcher eine Rohrklemme mit einem Kabelverteiler über eine Kopfkupplungseinheit und einen biegsamen Federschaft mit einer Stützringklemme verbunden ist, wobei die Stützringklemme um die äußere Oberfläche des Roboterarms geklemmt und verschraubt ist.

In der JP 2007 015057 A ist eine Kabelhaltevorrichtung beschrieben, bei der ein Tragring für ein Kabel über zwei verbundene, gebogene Befestigungsstäbe parallel zur Längsrichtung eines Roboterarmes ausgerichtet und mit einer Fixierbasis verbunden ist, wobei ein Fixierriegel um den Roboterarm mittels Bundmuttern fest an der Fixierbasis montiert ist.

Aufgabe der Erfindung ist es, den Stand der Technik zu verbessern.

Gelöst wird die Aufgabe durch eine Befestigungsvorrichtung für zumindest einen Versorgungsschlauch und/oder zumindest eine Versorgungsleitung zum Befestigen an einem Industrieroboterarm mit einem Halter, einer zuordenbaren Halteeinheit für den Versorgungsschlauch und/oder die Versorgungsleitung und einem verschließbaren Spannelement, wobei der Halter am verschließbaren Spannelement angeordnet ist, sodass der Halter durch ein Umspannen und ein Verschließen des Spannelementes um den Industrieroboterarm flexibel an dem Industrieroboterarm befestigbar und/oder positionierbar ist und somit im Falle eines Verbindens des Halters mit der zuordenbaren Halteeinheit der Versorgungsschlauch und/oder die Versorgungsleitung gezielt ausrichtbar ist oder sind, wobei das verschließbare Spannelement durch ein Inneres des Halters geführt ist.

Somit wird eine adaptierbare Befestigungsvorrichtung bereitgestellt, welche flexibel entlang der Längsrichtung eines Industrieroboterarmes und flexibel in jedem Winkel quer zur Längsrichtung des Roboterarmes positionierbar ist. Folglich kann die Befestigungsvorrichtung für einen Versorgungsschlauch und/oder eine Versorgungsleitung an einer optimalen Position am Industrieroboterarm angeordnet werden, ohne dass diese den Betrieb des Roboterarmes beeinträchtigt. Dadurch können Störkonturen am Roboterarm reduziert und das Kollisionsrisiko verringert werden.

Durch das Umspannen und Verschließen mit einem Spannelement erfolgt zudem eine einfache, schnelle und sichere Befestigung der Befestigungsvorrichtung am Industrieroboterarm. Dadurch ist auch eine schnelle Anpassung und/oder Korrektur der Befestigungsposition sowie ein schnelles Auswechseln einer Befestigungsvorrichtung, beispielsweise im Falle eines Defektes oder einer Beschädigung durch Schweißfunken, möglich.

Es ist besonders vorteilhaft, dass durch die Befestigungsvorrichtung eine enge Führung des Versorgungsschlauches und/oder der Versorgungsleitung entlang einer Außenkontur des Roboterarmes erfolgt.

Dadurch, dass das Spannelement in unterschiedlichen Spannelementlängen verschließbar ist, ist die Befestigungsvorrichtung für unterschiedliche Robotertypen und/oder Roboterarmdurchmesser verwendbar. Folglich ist die Befestigungsvorrichtung universal einsetzbar und kombinierbar. Insbesondere lässt sich die Befestigungsvorrichtung auch mit üblichen Halteeinrichtungen für Versorgungsschläuche und/oder Versorgungsleitungen, wie beispielsweise Kabelschellen und/oder Spannschellen, kombinieren.

Ein wesentlicher Gedanke der Erfindung beruht darauf, dass eine Befestigungsvorrichtung für einen Versorgungsschlauch und/oder -leitung flexibel und einfach lösbar an jeder Position eines Industrieroboterarmes mittels eines Spannelementes befestigbar ist, wobei der mit dem Spannelement verbundene Halter optimal an die Außenkontur des Industrieroboterarmes angepasst ist. Dadurch, dass der Halter mit der Halteeinheit für den Versorgungsschlauch und/oder -leitung verbindbar ist, wird der Versorgungsschlauch und/oder -leitung definiert am Industrieroboterarm ausgerichtet und/oder geführt.

Folgendes Begriffliche sei erläutert:

Eine "Befestigungsvorrichtung" ist insbesondere eine technische Vorrichtung zum Befestigen und/oder Fixieren eines Teiles an einem Industrieroboterarm, einer Betriebseinrichtung, Betriebsvorrichtung, Bearbeitungs- und/oder Werkzeugmaschine. Eine Befestigungsvorrichtung dient insbesondere zur Befestigung eines Versorgungsschlauches und/oder Versorgungsleitung an einem Industrieroboterarm. Eine Befestigungsvorrichtung weist insbesondere einen Halter und ein verschließbares Spannelement auf.

Ein "Versorgungsschlauch" ist insbesondere ein flexibler länglicher Hohlkörper mit einem definierten Querschnitt, welcher zur Versorgung eines Industrieroboters mit Energie, einem Medium und/oder Stoff und/oder Informationen dient. In dem Versorgungsschlauch wird entweder insbesondere ein Medium oder Stoff, wie beispielsweise Wasser oder Druckluft, direkt geführt oder in dem Versorgungsschlauch wird eine Versorgungsleitung oder werden mehrere Versorgungsleitungen und/oder weitere Schläuche zur Medienversorgung gebündelt geführt. Bei einem Versorgungsschlauch kann es sich insbesondere um einen Wellschlauch, ein Wellrohr und/oder um einen Glattschlauch handeln. Der Versorgungsschlauch weist insbesondere eine Nennweite von DN 8 bis DN 100, bevorzugt von DN 10 bis DN 50 auf. Ein Versorgungsschlauch hat insbesondere ein rundes, ovales, eckiges und/oder rechteckiges Profil.

Bei einer "Versorgungsleitung" handelt es sich insbesondere um eine elektrische Leitung zur Übertragung von elektrischen Strom und/oder Informationen. Eine Versorgungsleitung weist insbesondere einen elektrischen Leiter, beispielsweise in Form eines Drahtes oder einer Litze, und/oder eine isolierende Umhüllung auf. Bei einer Versorgungsleitung kann es sich insbesondere auch um ein Kabel, als ein mit einem Isolierstoff ummantelten ein- oder mehraderigen Verbund von Adern (Einzelleitungen), handeln. Eine Versorgungsleitung weist insbesondere ein rundes, ovales, eckiges und/oder rechteckiges Profil auf.

Ein "Industrieroboterarm" ist insbesondere ein beweglicher Arm eines Industrieroboters, welcher als eine universelle, programmierbare Maschine der Handhabung, Montage und/oder Bearbeitung von Werkstücken dient. Der Industrieroboterarm weist an seinem freien Arm-Ende insbesondere ein Werkzeug auf. Der Industrieroboterarm hat insbesondere sechs oder mehr Rotationsachsen. Bei einem Industrieroboterarm handelt es sich insbesondere um den Roboterarm eines Kleinstroboters.

Unter einem "Halter" wird insbesondere eine Vorrichtung zum Halten eines Gegenstandes verstanden. Ein Halter dient insbesondere zum Halten der Halteeinheit und/oder einer Fixierplatte, an welcher wiederum der Versorgungsschlauch, und/oder die Versorgungsleitung gehalten wird oder werden. Dazu weist der Halter insbesondere eine Verbindungseinheit und/oder eine Aufnahmeeinrichtung auf. Der Halter ist derart gestaltet, dass dieser sich insbesondere optimal der Außenkontur eines Industrieroboterarmes anpasst und/oder auf der Außenkontur des Industrieroboterarmes abstützt.

Eine "Halteeinheit" ist ein Halter für einen Versorgungsschlauch und/oder -leitung. Bei einer Halteeinheit kann es sich beispielsweise um eine Schelle, Klemme, Spannschelle und/oder eine Hülle handeln. Die Halteeinheit ist insbesondere unbeweglich oder dreh- und/oder schwenkbar. Alternativ kann es sich bei der Halteeinheit auch um ein Klettband und/oder ein anderes Spannelement handeln, welches außen um einen Versorgungsschlauch und/oder eine Versorgungsleitung geführt und am Halter direkt und/oder an einer Fixierplatte befestigt ist. Es ist besonders vorteilhaft, wenn das Klettband sowohl zum Befestigen des Versorgungsschlauches oder der Versorgungsleitung an dem Halter und auch gleichzeitig zum Befestigen des Halters an dem Industrieroboterarm dient. Somit sind in diesem Fall die Halteeinheit und das Spannelement identisch und/oder ein Teil.

Ein "Spannelement" ist insbesondere ein Band mit einem Verschluss zum Befestigen und Umspannen eines Gegenstandes. Ein Spannelement wird insbesondere um einen Industrieroboterarm gespannt und verschlossen. Das Band des Spannelementes ist insbesondere gewoben und/oder weist Kunststoff auf. Ein Spannelement besteht insbesondere aus Polypropylen, Polyester, Nylon und/oder Baumwolle.

Unter "Umspannen" wird insbesondere verstanden, dass das Spannelement festgezurrt unter Spannung den Industrieroboterarm von außen umschließt.

"Flexibel befestigbar und/oder positionierbar" bedeutet insbesondere, dass der Halter an jeglicher Position des Industrieroboterarmes befestigbar ist und einfach und leicht in seiner Position anpassbar ist.

Erfindungsgemäß ist das verschließbare Spannelement durch ein Inneres des Halters geführt.

Dadurch, dass ein Teil der Länge des Spannelementes durch ein Inneres des Halters geführt ist, wird beim Umspannen ein Druck des Spannelementes auf das darunterliegende Material des Halters in seinem Inneren ausgeübt. Folglich wird das Material des Halters, welches sich beim Umspannen zwischen dem Spannelement und dem Industrieroboterarm befindet durch den Spanndruck optimal gegen den Industrieroboterarm gedrückt und/oder geformt.

Zum einen kann das verschließbare Spannelement im Inneren des Halters mit dem umgebenden Material des Halters fest verbunden sein, beispielsweise im Material des Halters eingeschmolzen. Zum anderen ist das verschließbare Spannelement im Inneren des Halters beweglich angeordnet, indem der Halter in seinem Inneren einen Hohlraum entsprechend den Abmessungen des verschließbaren Spannelementes aufweist und das verschließbare Spannelement durch eine Öffnung im Halter in diesen Hohlraum eingeführt ist und an einem anderen Ende des Halters durch eine zweite Öffnung den Hohlraum wieder verlässt. Die letztere Variante hat den Vorteil, dass der Halter entlang des Spannelementes verschiebbar ist und somit in seiner Position am Spannelement noch leichter an unterschiedliche Roboterarmdurchmesser angepasst werden kann.

Um einen Roboterarm optimal zu umschließen, ist das verschließbare Spannelement in einer Längsrichtung des Halters geführt.

Somit kann das Spannelement durch seine Führung im Inneren des Halters in Längsrichtung entlang der Längsabmessung des Halters einen Spanndruck auf das darunterliegenden Materials des Halters ausüben und gegen den Industrieroboterarm drücken.

Eine "Längsrichtung" ist die Richtung des Halters, welcher der Richtung seiner größten Ausdehnung entspricht.

Um ein Verrutschen der Befestigungsvorrichtung am Industrieroboterarm zu verhindern, weist der Halter ein elastisches Material auf, sodass im Falles des Umspannens und Verschließen des Spannelementes um den Industrieroboterarm durch einen Reibschluss zwischen dem elastischen Material des Halters und einem Material des Industrieroboterarmes der Halter lagefixiert ist.

Somit wird über einen Reibschluss zusätzlich zum Spannelement eine lage- und betriebssichere Befestigungsvorrichtung sichergestellt.

Zu besseren Anpassbarkeit an unterschiedliche Durchmesser des Industrieroboterarms ist der Halter biegeflexibel.

Insbesondere durch das elastische Material ist der mit dem Spannelement verbundene Halter biegeflexibel und verformbar, sodass dieser sich optimal der Außenkontur des Industrieroboterarmes anpasst.

Ein "biegeflexibler" Halter ist besonders vorteilhaft, da dieser beim Verbiegen ein elastisches Verhalten zeigt und sich insbesondere nach dem Verbiegen wieder in die ursprüngliche Form zurück verformt, sodass der beigeflexible Halter nicht in seiner Form vorab für einen bestimmten Roboterarme vorangepasst sein muss.

Durch eine elastische und biegeflexible Auslegung des Halters ist oder sind der Versorgungsschlauch und/oder die Versorgungsleitung einer geringeren Biegewechselbelastung durch die Bewegung des Industrieroboterarmes ausgesetzt. Somit wird die Standzeit des Versorgungsschlauches und/oder der Versorgungsleitung erhöht.

Bei einem "elastischen Material" handelt es sich insbesondere um einen elastisch verformbaren Kunststoff (Elastomer). Ein elastisches Material ist beispielsweise Naturkautschuk oder Synthesekautschuk. Das elastische Material streckt sich insbesondere unter einer Zugbelastung und zieht sich nach einem Abfall der Zugspannung wieder zusammen.

Bei einem "Reibschluss" wird insbesondere durch eine Haftreibung zwischen den Flächen zweier Gegenstände ein Verschieben dieser Gegenstände verhindert. Insbesondere bewirkt der Reibschluss, dass sich das elastische Material des Halters und das Material des Industrieroboterarmes nicht gegeneinander verschieben, sodass der Halter am Industrieroboterarm lagefixiert ist.

Unter "lagefixiert" wird insbesondere verstanden, dass sich die Position und/oder Lage des Halters und des Industrieroboterarms zueinander nicht ändert.

In einer weiteren Ausführungsform der Befestigungsvorrichtung weist der Halter Polyurethan, insbesondere mit einer Shore-Härte von 30° bis 60° Shore A, auf.

Es ist besonders vorteilhaft, Polyurethan mit einer Shore-Härte von 30° bis 60° Shore A, bevorzugt von 40° bis 50° Shore A, für den Halter zu verwenden, da dadurch ein optimaler Reibschluss mit dem üblicherweise verwendeten Material Aluminium des Industrieroboterarmes erzielt wird.

Somit wird ein rutschhemmender Halter bereitgestellt, welcher sich auf unterschiedlichen Oberflächen, wie auf Gussmaterial, Aluminium, lackierten Oberflächen, einsetzen lässt.

Um eine ausreichende Fläche für den Reibschluss zur Verfügung zu stellen, umfasst im Falle des Reibschlusses das elastische Material und/oder das Polyurethan des Halters einen Winkelbereich von 90° bis 230°, bevorzugt 150° bis 180°, quer zu einer Längsrichtung des Industrieroboterarmes.

In einer weiteren Ausführungsform der Befestigungsvorrichtung weist der Halter und/oder der biegeflexible Halter mindestens einen Einschnitt oder mehrere Einschnitte an einer Kontaktfläche zum Industrieroboterarm auf, sodass der Halter und/oder der biegeflexible Halter an den Industrieroboterarm formbar ist.

Es ist besonders vorteilhaft, wenn die Kontaktfläche des Halters und/oder des biegeflexiblen Halters, welche am Industrieroboterarm anliegt, uneben gestaltet und/oder mit Einschnitten geformt ist, sodass sich der Halter an diesen Einschnitten besser biegen und somit besser an unterschiedlichen Roboterarmdurchmesser anpassen und/oder formen lässt. Zudem kann auch durch die unebene Gestaltung eine Rutschhemmung erzielt werden.

Ein "Einschnitt" ist insbesondere eine Vertiefung im Halter, wobei die Vertiefung auf der Seite der Kontaktfläche des Halters zu einem Industrieroboterarm offen ist. Bevorzugt weist ein Halter mehrere Einschnitte entlang seiner Längsrichtung auf, wobei die Einschnitte unterschiedliche Formen, wie beispielsweise runde, eckige und/oder dreieckige Formen, und unterschiedliche Tiefen der Einschnitte aufweisen können.

In einer weiteren Ausführungsform der Befestigungsvorrichtung ist alternativ oder ergänzend der Halter durch ein mechanisches und/oder chemisches Mittel an dem Industrieroboterarm wechselseitig lagefixierbar.

Dadurch kann ein Verrutschen auch bei einem hohen Gewicht der Versorgungsleitung und/oder des Versorgungsschlauches sowie bei starken Bewegungen und somit Biegebelastungen verhindert werden.

Bei einem "mechanischen und/oder chemischen Mittel" handelt es sich insbesondere um ein Mittel, welches durch mechanische und/oder chemische Kräfte eine Bewegung zwischen den angrenzenden Flächen des Halters und des Industrieroboterarmes verhindert. Bei einem "chemischen Mittel" kann es sich beispielsweise um einen Haftkleber handeln, wobei der Haftkleber dauerhaft klebend oder wieder ablösbar sein kann. Bei einem "mechanischen Mittel" kann es sich beispielsweise um einen Vorsprung am Halter handeln, welcher in eine Nut am Industrieroboterarm eingreift. Als mechanisches Mittel können beispielsweise auch ein Klettband mit Widerhaken am Halter und ein zugeordnetes Klettband mit Schlaufen am Industrieroboterarm angeordnet sein, welche einen Klettverschluss ausbilden.

Um ein sicheres Verschließen des Spannelementes auch unter starken Bewegungen des Industrieroboterarmes zu gewährleisten, weist das verschließbare Spannelement einen Klett-, Schnapp-, Klemm-, Anpress-, Koppel- und/oder D-Ring-Verschluss auf.

In einer weiteren Ausführungsform weist die Befestigungsvorrichtung eine Fixierplatte mit mindestens einer Verbindungseinheit zum Verbinden der Fixierplatte mit der zuordenbaren Halteeinheit auf und ist die Fixierplatte am Halter angeordnet.

Dadurch, dass an dem Halter eine Fixierplatte verbunden ist, welche der Verbindung zum Halter des Versorgungsschlauches und/oder -leitung dient, wird trotz der Elastizität des Halters eine ausreichende Steifigkeit zum Halten des Versorgungsschlauches und/oder -leitung auch bei einer starken Bewegung des Industrieroboterarmes gewährleistet. Somit wird der Versorgungsschlauch und/oder -leitung definiert am Industrieroboterarm ausgerichtet und/oder geführt.

Eine "Fixierplatte" ist insbesondere eine starre Platte, an welcher eine Halteeinheit für den Versorgungsschlauch und/oder die Versorgungsleitung verbunden werden kann oder ist. Eine Fixierplatte weist beispielsweise ein starres Material, wie Metall und/oder Keramik, auf. Die Fixierplatte umfasst insbesondere eine Verbindungseinheit, welche dem festen Verbinden einer Halteeinheit für den Versorgungsschlauch und/oder die Versorgungsleitung dient. Bei einer "Verbindungseinheit" kann es sich beispielsweise um ein Schraubgewinde, eine Nut, eine Passfedernut und/oder ähnliches handeln.

In einer weitere Ausführungsform der Befestigungsvorrichtung weist der Halter eine Aufnahmeeinrichtung auf, an oder in welcher die Fixierplatte an- oder einbringbar ist, sodass die Fixierplatte austauschbar ist.

Somit ist über die Aufnahmeeinrichtung eine optimale Verbindung zwischen dem Halter und der Fixierplatte gewährleistet.

Es ist besonders vorteilhaft, dass die Aufnahmeeinrichtung derart ausgeführt ist, dass durch Zugspannung auf den Halter während des Umspannens auch die Aufnahmeeinrichtung derart verformt wird, dass die Fixierplatte an den Halter und somit in Richtung auf den Industrieroboterarm gedrückt wird. Somit ist es vorteilhaft, wenn die Aufnahmeeinrichtung und/oder der Halter zumindest teilweise die Fixierplatte umschließen.

Somit kann eine austauschbare Fixierplatte komplett mit der Halteeinheit für den Versorgungsschlauch und/oder die Versorgungsleitung gewechselt werden, ohne dass die Halteeinheit von der Verbindungseinheit der Fixierplatte demontiert werden muss.

Bei einer "Aufnahmeeinrichtung" handelt es sich insbesondere um einen Schlitz, Einschnitt oder Hohlraum im Halter, an oder in welchen die Fixierplatte an- oder einsetzbar ist.

Um eine stabile Lage der Fixierplatte zu erreichen, ist die Fixierplatte innerhalb des Halters angeordnet, wobei die mindestens eine Verbindungseinheit zum Verbinden mit der Halteeinheit von außen zugänglich ist.

Durch die Anordnung der Fixierplatte innerhalb des Halters wird im Falle des Spannens des Spanngurtes eine Zugspannung vom Halter auf die Fixierplatte übertragen, sodass die Fixierplatte gegen den darunterliegenden Spanngurt und den Industrieroboterarm gedrückt wird. Somit wird eine Lagefixierung der Fixierplatte und der daran verbundenen Haltereinheit mit der Versorgungsleitung und/oder den Versorgungsschlauch erzielt.

In einer weiteren Ausführungsform weist oder weisen die Befestigungsvorrichtung und/oder die Befestigungseinrichtungen die Halteeinheit und/oder den Versorgungsschlauch und/oder die Versorgungsleitung auf, sodass der Versorgungschlauch und/oder die Versorgungsleitung entlang einer Außenkontur des Industrieroboterarmes führbar ist.

Somit können die Versorgungsleitung und/oder der Versorgungsschlauch eng entlang einer Außenkontur des Industrieroboterarmes geführt und dennoch einem geringen Biegewechselbelastung ausgesetzt werden.

Um einen Einsatz an unterschiedlichen Industrieroboterarmen zu ermöglichen, weist der Halter ein rundes, ovales, eckiges und/oder rechteckiges Profil auf.

Dadurch liegt der Halter je nach seinem Profil direkt am Industrieroboterarm an oder stützt sich an einer Stelle oder mehreren Stellen am Industrieroboterarm ab. Somit kann über die Form des Halters auch ein Abstand des Versorgungsschlauches und/oder -leitung zum Industrieroboterarm eingestellt werden.

n einem weiteren Aspekt der Erfindung wird die Aufgabe gelöst durch einen Industrieroboterarm zur Handhabung, Montage und/oder Bearbeitung eines Werkstückes, wobei der Industrieroboterarm zumindest einen Versorgungsschlauch und/oder zumindest eine Versorgungsleitung zur Energie-, Medien- und/oder Signalzuführung und zumindest eine Befestigungsvorrichtung aufweist, wobei die Befestigungsvorrichtung an dem Industrieroboterarm befestigt ist und einen Halter, eine zuordenbare Halteeinheit für den Versorgungsschlauch und/oder die Versorgungsleitung und ein verschließbares Spannelement aufweist, wobei die Halteeinheit mit dem Halter verbunden, der Halter am verschließbaren Spannelement angeordnet und der Halter durch ein Umspannen und ein Verschließen des Spannelements um den Industrieroboterarm flexibel an dem Industrieroboterarm befestigt und/oder positioniert ist, sodass der Versorgungsschlauch und/oder die Versorgungsleitung gezielt ausrichtet ist oder sind.

In einer weiteren Ausführungsform des Industrieroboterarm ist die Befestigungsvorrichtung eine zuvor beschriebene Befestigungsvorrichtung oder ist oder sind der Versorgungsschlauch und/oder die Versorgungsleitung ein zuvor beschriebener Versorgungsschlauch und/oder eine zuvor beschriebene Versorgungsleitung.

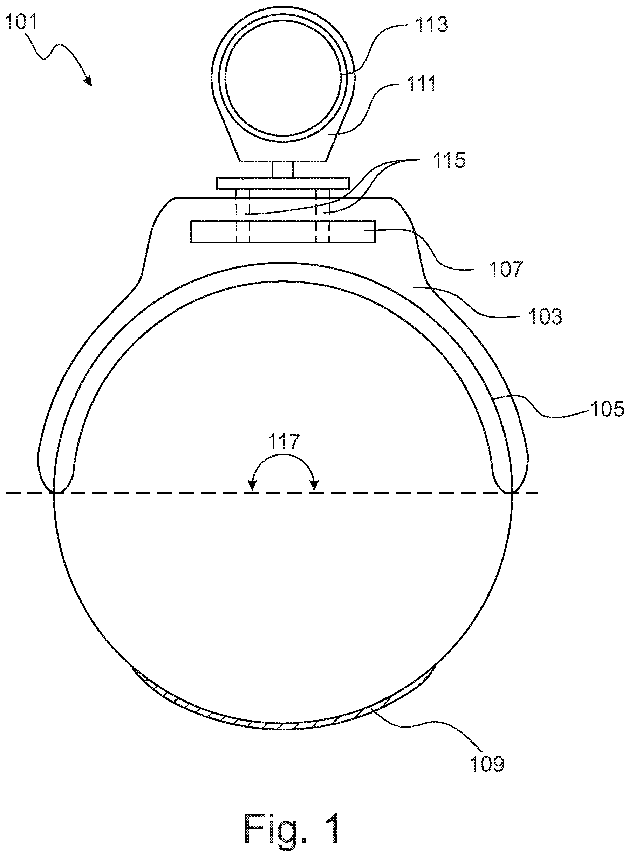

Im Weiteren wird die Erfindung anhand von Ausführungsbeispielen näher erläutert. Es zeigen
- Figur 1: eine schematische Schnittdarstellung eines Befestigungshalters mit einem Wellschlauch,

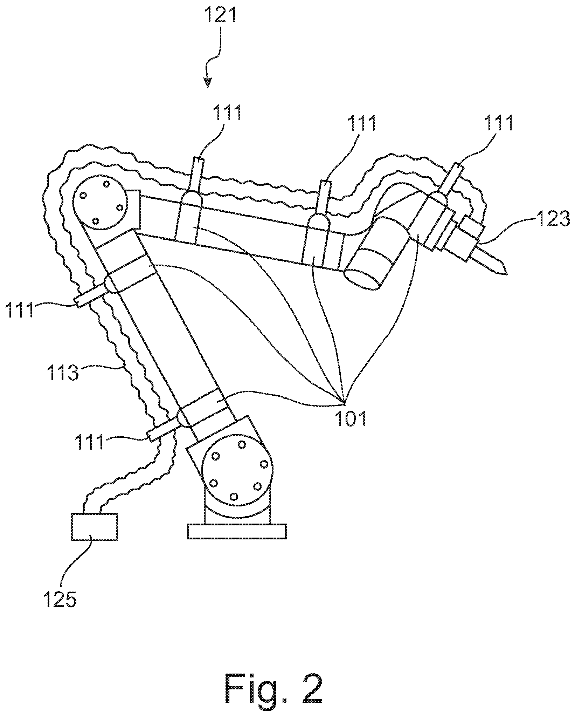

- Figur 2: eine schematische Schnittdarstellung eines Industrieroboterarmes mit fünf Befestigungshaltern und einem Wellschlauch,

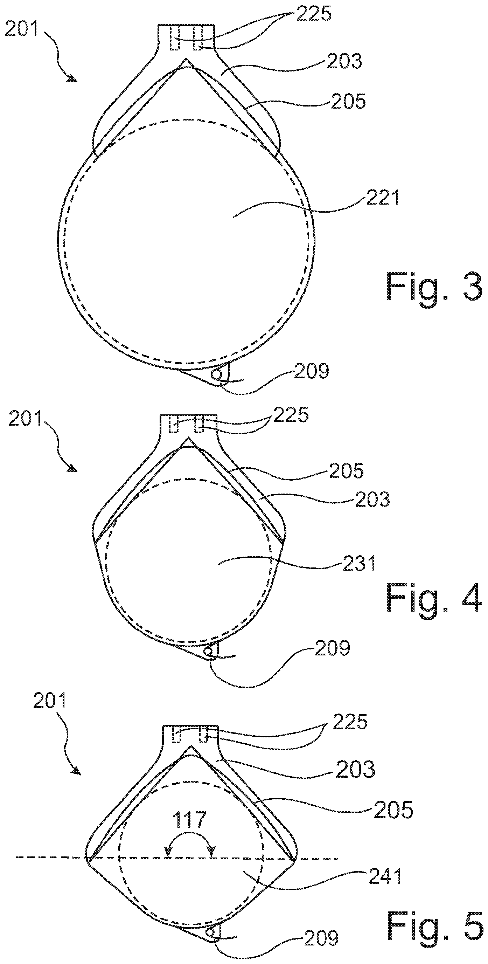

- Figur 3: eine schematische Schnittdarstellung eines Befestigungshalters mit einem starren Halter an einem Industrieroboterarm mit großem Durchmesser,
- Figur 4: eine schematische Schnittdarstellung eines Befestigungshalters mit einem starren Halter an einem Industrieroboterarm mit mittlerem Durchmesser,
- Figur 5: eine schematische Schnittdarstellung eines Befestigungshalters mit einem starren Halter an einem Industrieroboterarm mit kleinem Durchmesser, und

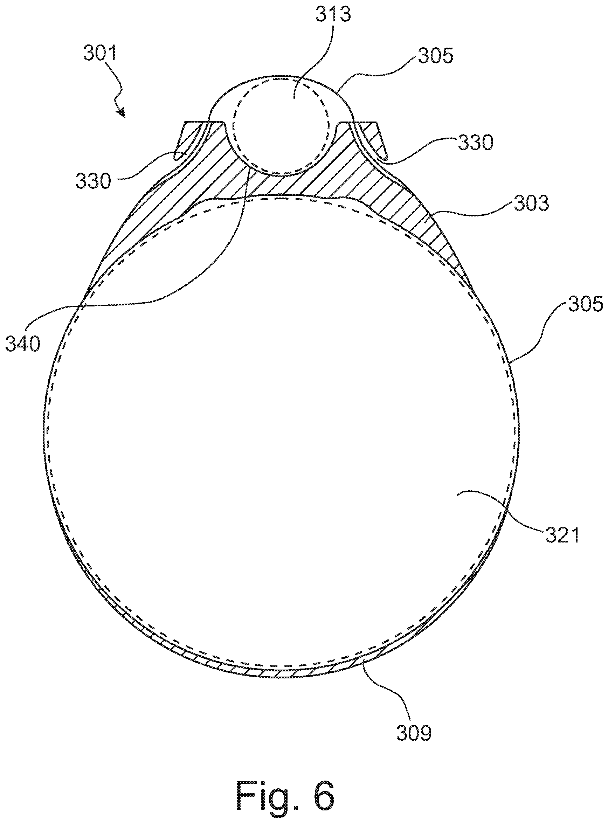

- Figur 6: eine schematische Schnittdarstellung eines Befestigungshalter mit einem PUR-Halter und einem Klettband zur gleichzeitigen Befestigung eines Wellrohres an den PUR-Halter und des PUR-Halters an einem Industrieroboterarm.

Ein Befestigungshalter 101 weist ein Gurtband 105 und das Gurtband 105 an seinen beiden Enden einen Klettverschluss 109 auf. Des Weiteren umfasst der Befestigungshalter 101 einen PUR-Halter 103 und eine Stahlplatte 107. Das Gurtband 105 ist durch das Innere des PUR-Halters 103 geführt, wobei im Falle des durch den Klettverschluss 109 geschlossenen Gurtbandes 105 der PUR-Halter 103 eine Länge entsprechend eines Winkels 117 von 180° der Länge des geschlossenen Gurtbandes 105 sowie einen Winkel 117 von 180° eines Umfangs eines zu umschließenden Industrieroboterarmes 121 einnimmt.

Die Stahlplatte 107 ist innerhalb eines Hohlraumes im Inneren des PUR-Halters 103 angeordnet. Die Stahlplatte 107 weist zwei Schraubgewinde auf, in welche zwei Schrauben 115 einer schwenkbaren Schelle 111 geschraubt sind. Hierbei sind die beiden Schrauben 115 durch zwei Öffnungen in dem PUR-Halter 103 in die Stahlplatte 107 geführt. Die schwenkbare Schelle 111 trägt in ihrem Inneren einen Wellschlauch 113. Der Wellschlauch weist eine Nennweite von DN 25 auf.

Ein Industrieroboterarm 121 weist sechs Rotationsachsen auf. Am Ende des Industrieroboterarms 121 ist ein Montagewerkzeug 123 zur Montage von Werkstücken angeordnet. Das Montagewerkzeug 123 ist über den Wellschlauch 113 mit einer Zentralversorgung 125 verbunden. In dem Wellschlauch 113 sind eine Stromversorgungsleitung, eine Signalleitung und ein Druckluftschlauch von der Zentralversorgung 125 bis zum Werkzeug 123 geführt.

An fünf Positionen entlang des Industrieroboterarmes 121 sind fünf Befestigungshalter 101 durch Festziehen des jeweiligen Gurtbandes 105 und Verschließen mittels des jeweiligen Klettverschlusses 109 positioniert und befestigt worden. Die Befestigungshalter 101 sind durch einen Reibschluss zwischen einer jeweils am Industrieroboterarm 121 anliegenden Fläche des jeweiligen PUR-Halters 103 und einer anliegenden Fläche des aus Aluminium bestehenden Industrieroboterarmes 121 lagefixiert.

Der Wellschlauch 113 ist jeweils mittels schwenkbarer Schellen 111 an den fünf Befestigungshaltern 101 verbunden, sodass der Wellschlauch 113 eng entlang des Industrieroboterarmes 121 geführt ist.

Aufgrund des elastischen PUR-Halters 103 jedes Befestigungshalters 101 ist der Wellschlauch 113 biegeflexibel entlang des Industrieroboterarmes 121 geführt und unterliegt aufgrund von Bewegungen des Industrieroboterarmes 121 während der Montage nur geringen Biegebelastungen. Durch die enge Führung des Wellschlauches 113 liegen keine Störkonturen durch die Befestigungshalter 101 im Arbeitsbereich des Industrieroboterarmes 121 vor. Somit erfolgt eine optimale Strom-, Signal- und Druckluftversorgung des Industrieroboterarmes 121 über den enggeführten Wellschlauch 113, ohne dass der Betrieb des Industrieroboterarmes 121 bei der Montage der Werkstücke beeinträchtigt wird.

In einer Alternative weist ein Befestigungshalter 201 einen starren Halter 203 aus einem Acryl-Butadien-StyrolCopolymer auf. Des Weiteren umfasst der Befestigungshalter 201 ein Polyester-Band 205 mit einem Klemmverschluss 209.

Der starre Halter 203 ist auf seiner innenliegenden Seite seiner beiden Schenkel eckig ausgeführt und weist an seiner Oberseite zwei Schraubgewinde 225 auf. Das Polyester-Band 205 ist durch den starren Halter 203 geführt.

Zum Befestigen um einen Industrieroboterarm 221 wird das Polyester-Band 205 mit dem starren Halter 203 um den Industrieroboterarm 221 gespannt und mittels des Klettverschlusses 209 festgezogen und verschlossen.

Der Industrieroboterarm 221 weist einen großen Durchmesser von 250mm auf, sodass der starre Halter 203 mit den beiden Enden seiner Schenkel auf einem oberen Abschnitt eines Umfangs des Industrieroboterarms 221 aufliegt, wobei ein Abstand zwischen den beiden Schenkeln einen 90° Winkel eines Umfanges des Industrieroboterarms 221 umfasst.

Anschließend wird eine nicht gezeigte Klemmschelle mittels Schrauben in die Schraubgewinde 225 verschraubt und ein nicht gezeigter Versorgungsschlauch, welcher mehrere Daten- und Leistungskabel in seinem Inneren führt, in der Klemmschelle eingeklemmt.

Nach Verwendung des Befestigungshalters 201 am Industrieroboterarm 221 wird der Befestigungshalter 201 mit dem starren Halter 203 in entsprechender Weise an einem Industrieroboterarm 231 befestigt. Der Industrieroboterarm 231 weist einen mittleren Durchmesser von 150mm auf, sodass der starre Halter 203 nicht mit den Enden seiner beiden Schenkel sondern an seinen innenliegenden Seiten auf dem Industrieroboterarm 231 aufliegt. Hierbei umfasst der starre Halter 203 einen Winkel von 135° eines Umfanges des Industrieroboterarms 231.

In einer späteren Anwendung wird der Befestigungshalter 201 mit dem starren Halter 203 in analoger Weise an einem Industrieroboterarm 241 mit einem kleinen Durchmesser von 75mmm befestigt. Der starre Halter 203 liegt mittig an den innenliegenden Seiten seiner Schenkel auf dem Industrieroboterarm 241 auf und umfasst insgesamt einen Winkel 117 von 180° eines Umfanges des Industrieroboterarms 241.

Somit ist der Befestigungshalter 201 mit dem starren Halter 203 flexible für unterschiedliche Industrieroboterarme nutzbar.

In einer weiteren Alternative weist ein Befestigungshalter 301 einen flexiblen PUR-Halter 303, ein Klettband 305 mit einem Klettverschluss 309 und eine halbkreisförmige Aufnahme 340 auf. Der PUR-Halter 303 weist seitlich zwei Einführungsschlitze 330 auf, durch welche das Klettband 305 jeweils durch den oberen Teil des PUR-Halters 303 geführt ist. Entlang beider Schenkel des PUR-Halter 303 liegt das Klettband 305 jeweils außen zwischen einer Führung.

Zur Montage wird das Klettband 305 durch die Einführungsschlitze 330 eingeführt und bildet dadurch einen Halbkreis über der halbkreisförmige Aufnahme 340 aus. Anschließend wird der Befestigungshalter 301 an einer vorgesehenen Stelle außen an einem Industrieroboterarm 321 positioniert. Ein Wellrohr 313 mit einem Außendurchmesser von 29,4 mm wird zwischen dem oberen Klettband 305 und dem PUR-Halter 303 durchgeführt und in die halbkreisförmige Aufnahme 340 des PUR-Halters 303 eingelegt. Das Klettband 305 wird um das Wellrohr 313 und den Industrieroboterarm 312 festgezogen und mittels des Klettverschlusses 309 verschlossen. Dadurch wird gleichzeitig in einem Arbeitsschritt das Wellrohr 313 am PUR-Halter 303 und der PUR-Halter 303 am Industrieroboterarm 321 befestigt. Durch eine unebene Ausführung des PUR-Halters 303 an einer innenliegenden Kontaktfläche zum Industrieroboterarm 321 ist der PUR-Halter 303 besser an einen Durchmesser des Industrieroboterarms 321 anpassbar und rutschhemmend.

Somit wird ein Befestigungshalter 301 bereitgestellt, welcher frei von der Verwendung von Schrauben und Werkzeugen eine schnelle Installation ermöglicht und zudem eine sehr geringe Bauhöhe aufweist, welche nur geringfügig über einer Höhe des Wellrohres 313 liegt.

## Patentansprüche

1. Befestigungsvorrichtung (101) für zumindest einen Versorgungsschlauch (113) und/oder zumindest eine Versorgungsleitung zum Befestigen an einem Industrieroboterarm (121) mit einem Halter (103), einer zuordenbaren Halteeinheit (111) für den Versorgungsschlauch (113) und/oder die Versorgungsleitung und einem verschließbaren Spannelement (105), wobei der Halter (103) am verschließbaren Spannelement (105) angeordnet ist, sodass der Halter (103) durch ein Umspannen und ein Verschließen des Spannelements (105) um den Industrieroboterarm (121) flexibel an dem Industrieroboterarm (121) befestigbar und/oder positionierbar ist und somit im Falle eines Verbindens des Halters (103) mit der zuordenbaren Halteeinheit (111) der Versorgungsschlauch (113) und/oder die Versorgungsleitung gezielt ausrichtbar ist oder sind, **dadurch gekennzeichnet, dass** das verschließbare Spannelement (105) durch ein Inneres des Halters (103) geführt ist.

2. Befestigungsvorrichtung (101) nach Anspruch 1, **dadurch gekennzeichnet, dass** das verschließbare Spannelement (105) in einer Längsrichtung des Halters (103) geführt ist.

3. Befestigungsvorrichtung (101) nach einem der Ansprüche 1 oder 2, **dadurch gekennzeichnet, dass** der Halter (103) ein elastisches Material aufweist, sodass im Falle des Umspannens und Verschließens des Spannelementes (105) um den Industrieroboterarm (121) durch einen Reibschluss zwischen dem elastischen Material des Halters (103) und einem Material des Industrieroboterarms (121) der Halter (103) lagefixiert ist.

4. Befestigungsvorrichtung (101) nach Anspruch 3, **dadurch gekennzeichnet, dass** der Halter (103) Polyurethan, insbesondere mit einer Shore-Härte von 30° bis 60° Shore A, aufweist.

5. Befestigungsvorrichtung (101) nach einem der Ansprüche 3 oder 4, **dadurch gekennzeichnet, dass** im Falle des Reibschlusses das elastische Material und/oder das Polyurethan des Halters (103) einen Winkelbereich von 90° bis 230°, bevorzugt 150° bis 180°, quer zu einer Längsrichtung des Industrieroboterarmes (121) umfasst.

6. Befestigungsvorrichtung (101) nach einem der Ansprüche 3 bis 5, **dadurch gekennzeichnet, dass** der Halter (103) biegeflexibel ist, sodass der biegeflexible Halter an unterschiedliche Durchmesser des Industrieroboterarms (121) anpassbar ist.

7. Befestigungsvorrichtung (101) nach einem der Ansprüche 1 bis 6, **dadurch gekennzeichnet, dass** der Halter (103) und/oder der biegeflexible Halter mindestens einen Einschnitt oder mehrere Einschnitte an einer Kontaktfläche zum Industrieroboterarm (121) aufweist, sodass der Halter (103) und/oder der biegeflexible Halter an den Industrieroboterarm (121) formbar ist.

8. Befestigungsvorrichtung (101) nach einem der Ansprüche 1 bis 7, **dadurch gekennzeichnet, dass** der Halter (103) durch ein mechanisches und/oder chemisches Mittel an dem Industrieroboterarm (121) wechselseitig lagefixierbar ist.

9. Befestigungsvorrichtung (101) nach einem der Ansprüche 1 bis 8, **dadurch gekennzeichnet, dass** das verschließbare Spannelement (105) einen Klett- (109), Schnapp-, Klemm-, Anpress-, Koppel- und/oder D-Ring-Verschluss aufweist.

10. Befestigungsvorrichtung (101) nach einem der Ansprüche 1 bis 9, **dadurch gekennzeichnet, dass** die Befestigungsvorrichtung (101) eine Fixierplatte (107) mit mindestens einer Verbindungseinheit (115) zum Verbinden der Fixierplatte (107) mit der zuordenbaren Halteeinheit (111) aufweist und die Fixierplatte (107) am Halter (103) angeordnet ist.

11. Befestigungsvorrichtung (101) nach Anspruch 10, **dadurch gekennzeichnet, dass** der Halter (103) eine Aufnahmeeinrichtung aufweist, an oder in welcher die Fixierplatte (107) an- oder einbringbar ist, sodass die Fixierplatte (107) austauschbar ist.

12. Befestigungsvorrichtung (101) nach Anspruch 11, **dadurch gekennzeichnet, dass** die Fixierplatte (107) innerhalb des Halters (103) angeordnet ist, wobei die mindestens eine Verbindungseinheit (115) zum Verbinden mit der Halteeinheit (111) von außen zugängig ist.

13. Befestigungsvorrichtung (101) nach einem der Ansprüche 1 bis 12, **dadurch gekennzeichnet, dass** die Befestigungsvorrichtung (101) und/oder die Befestigungsvorrichtungen die Halteeinheit (111) und/oder den Versorgungsschlauch (113) und/oder die Versorgungsleitung aufweist oder aufweisen, sodass der Versorgungsschlauch (113) und/oder die Versorgungsleitung entlang einer Außenkontur des Industrieroboterarms (121) führbar ist.

14. Befestigungsvorrichtung (101) nach einem der Ansprüche 1 bis 13, **dadurch gekennzeichnet, dass** der Halter (103) ein rundes, ovales, eckiges und/oder rechteckiges Profil aufweist.

## Claims

1. Attaching device (101) for at least one supply pipe (113) and/or at least one supply line for attaching to an industrial robot arm (121) with a holder (103), an associable holder unit (111) for the supply pipe (113) and/or the supply line and a closable clamping element (105), wherein the holder (103) is arranged on the closable clamping element (105) such that the holder (103) can be attached to the industrial robot arm (121) and/or positioned thereon in a flexible manner by means of clamping and closing the clamping element (105) around the industrial robot arm (121) and thus, in the event of the connection of the holder (103) to the associable holder unit (111), the supply pipe (113) and/or the supply line can be oriented in a targeted manner, **characterised in that** the closable clamping element (105) is guided through an interior of the holder (103).

2. Attaching device (101) according to claim 1, **characterised in that** the closable clamping element (105) is guided in a longitudinal direction of the holder (103).

3. Attaching device (101) according to any one of claims 1 or 2, **characterised in that** the holder (103) has an elastic material such that in the event of the clamping element (105) being clamped and locked around the industrial robot arm (121), the holder (103) is fixed in position by a frictional connection between the elastic material of the holder (103) and a material of the industrial robot arm (121).

4. Attaching device (101) according to claim 3, **characterised in that** the holder (103) has polyurethane, in particular with a Shore hardness of 30° to 60° Shore A.

5. Attaching device (101) according to any one of claims 3 or 4, **characterised in that** in the event of frictional engagement, the elastic material and/or the polyurethane of the holder (103) comprises an angular range of 90° to 230°, preferably 150° to 180°, transverse to a longitudinal direction of the industrial robot arm (121).

6. Attaching device (101) according to any one of claims 3 to 5, **characterised in that** the holder (103) is flexural, so that the flexural holder can be adapted to different diameters of the industrial robot arm (121).

7. Attaching device (101) according to any one of claims 1 or 6, **characterised in that** the holder (103) and/or the flexural holder has at least one incision or a plurality of incisions on a contact surface to the industrial robot arm (121), so that the holder (103) and/or the flexural holder can be moulded to the industrial robot arm (121).

8. Attaching device (101) according to any one of claims 1 to 7, **characterised in that** the holder (103) is mutually position-fixable to the industrial robot arm (121) by a mechanical and/or chemical means.

9. Attaching device (101) according to any one of claims 1 to 8, **characterised in that** the lockable clamping element (105) has a Velcro (109), snap, clamping, press-on, coupling and/or D-ring fastener.

10. Attaching device according to any one of claims 1 to 9, **characterised in that** the attaching device (101) has a fixing plate (107) with at least one connection unit (115) for connecting the fixing plate (107) to the associable holder unit (111) and the fixing plate (107) is arranged on the holder (103).

11. Attaching device (101) according to claim 10, **characterised in that** the holder (103) has a receiving device on or in which the fixing plate (107) can be mounted or inserted, so that the fixing plate (107) can be replaced.

12. Attaching device (101) according to claim 11, **characterised in that** the fixing plate (107) is arranged inside the holder (103), wherein the at least one connection unit (115) is accessible from the outside for connecting to the holder unit (111).

13. Attaching device (101) according to any one of claims 1 to 12, **characterised in that** the attaching device (101) and/or the attaching devices has or have the holder unit (111), the supply pipe (113) and/or the supply line, such that the supply pipe (113) and/or the supply line are guidable along an outer contour of the industrial robot arm (121).

14. Attaching device (101) according to any one of claims 1 to 13, **characterised in that** the holder (103) has a round, oval, square or rectangular profile.

## Revendications

1. Dispositif de fixation (101) pour au moins un tuyau flexible d'alimentation (113) et/ou au moins une conduite d'alimentation destinés à être fixés sur un bras robotisé industriel (121) avec un dispositif de maintien (103), une unité de maintien (111) pouvant être associée pour le tuyau flexible d'alimentation (113) et/ou la conduite d'alimentation et avec un élément de serrage (105) pouvant être fermé, dans lequel le dispositif de maintien (103) est disposé sur l'élément de serrage (105) pouvant être fermé si bien que le dispositif de maintien (103) peut être fixé et/ou positionné de manière flexible sur le bras robotisé industriel (121) en serrant et en fermant l'élément de serrage (105) autour du bras robotisé industriel (121)et, ainsi, dans le cas d'une liaison du dispositif de maintien (103) à l'unité de maintien (111) pouvant être associée, le tuyau flexible d'alimentation (113) et/ou la conduite d'alimentation peuvent être orientés de manière ciblée, **caractérisé en ce que** l'élément de serrage (105) pouvant être fermé est guidé à travers un espace intérieur du dispositif de maintien (103).

2. Dispositif de fixation (101) selon la revendication 1, **caractérisé en ce que** l'élément de serrage (105) pouvant être fermé est guidé dans une direction longitudinale du dispositif de maintien (103).

3. Dispositif de fixation (101) selon l'une quelconque des revendications 1 ou 2, **caractérisé en ce que** le dispositif de maintien (103) présente un matériau élastique si bien que, dans le cas du serrage et de la fermeture de l'élément de serrage (105) autour du bras robotisé industriel (121) le dispositif de maintien (103) est bloqué en position par une liaison à force entre le matériau élastique du dispositif de maintien (103) et un matériau du bras robotisé industriel (121).

4. Dispositif de fixation (101) selon la revendication 3, **caractérisé en ce que** le dispositif de maintien (103) présente du polyuréthane, en particulier avec une dureté Shore de 30° à 60° Shore A.

5. Dispositif de fixation (101) selon l'une quelconque des revendications 3 ou 4, **caractérisé en ce que** dans le cas de la liaison à force, le matériau élastique et/ou le polyuréthane du dispositif de maintien (103) comprennent une plage angulaire de 90° à 230°, de manière préférée de 150° à 180°, de manière transversale par rapport à un sens longitudinal du bras robotisé industriel (121).

6. Dispositif de fixation (101) selon l'une quelconque des revendications 3 à 5, **caractérisé en ce que** le dispositif de maintien (103) est flexible en flexion si bien que le dispositif de maintien flexible en flexion peut être adapté à des diamètres différents du bras robotisé industriel (121) .

7. Dispositif de fixation (101) selon l'une quelconque des revendications 1 à 6, **caractérisé en ce que** le dispositif de maintien (103) et/ou le dispositif de maintien flexible en flexion présentent au moins une incision ou plusieurs incisions sur une surface de contact avec le bras robotisé industriel (121) si bien que le dispositif de maintien (103) et/ou le dispositif de maintien flexible en flexion peuvent être façonnés sur le bras robotisé industriel (121).

8. Dispositif de fixation (101) selon l'une quelconque des revendications 1 à 7, **caractérisé en ce que** le dispositif de maintien (103) peut être bloqué en position en alternance sur le bras robotisé industriel (121) par un moyen mécanique et/ou chimique.

9. Dispositif de fixation (101) selon l'une quelconque des revendications 1 à 8, **caractérisé en ce que** l'élément de serrage (105) pouvant être fermé présente une fermeture autoagrippante (109), une fermeture à déclic, une fermeture par serrage, une fermeture par pression, une fermeture par couplage et/ou une fermeture par un anneau en D.

10. Dispositif de fixation (101) selon l'une quelconque des revendications 1 à 9, **caractérisé en ce que** le dispositif de fixation (101) présente une plaque de blocage (107) avec au moins une unité de liaison (115) pour relier la plaque de blocage (107) à l'unité de maintien (111) pouvant être associée et la plaque de blocage (107) est disposée sur le dispositif de maintien (103).

11. Dispositif de fixation (101) selon la revendication 10, **caractérisé en ce que** le dispositif de maintien (103) présente un système de réception, sur lequel ou dans lequel la plaque de blocage (107) peut être installée ou introduite si bien que la plaque de blocage (107) peut être remplacée.

12. Dispositif de fixation (101) selon la revendication 11, **caractérisé en ce que** la plaque de blocage (107) est disposée à l'intérieur du dispositif de maintien (103), dans lequel l'au moins une unité de liaison (115) est accessible depuis l'extérieur pour être reliée à l'unité de maintien (111).

13. Dispositif de fixation (101) selon l'une quelconque des revendications 1 à 12, **caractérisé en ce que** le dispositif de fixation (101) et/ou les dispositifs de fixation présentent l'unité de maintien (111) et/ou le tuyau flexible d'alimentation (113) et/ou la conduite d'alimentation si bien que le tuyau flexible d'alimentation (113) et/ou la conduite d'alimentation peuvent être guidés le long d'un contour extérieur du bras robotisé industriel (121).

14. Dispositif de fixation (101) selon l'une quelconque des revendications 1 à 13, **caractérisé en ce que** le dispositif de maintien (103) présente un profil rond, ovale, angulaire et/ou rectangulaire.
